# EUROPEAN PATENT SPECIFICATION

(11) **EP 2 630 384 B1**
(45) Date of publication and mention of the grant of the patent: **11.12.2019**
(21) Application number: 11834778.0
(22) Date of filing: 29.07.2011
(51) Int. Cl.: F16D 27/01, F16D 27/00

(54) **VARIABLE SPEED MAGNETIC COUPLING**
MAGNETKUPPLUNG MIT VARIABLER GESCHWINDIGKEIT
COUPLAGE MAGNÉTIQUE À VITESSE VARIABLE

(30) Priority: 20.10.2010 US 405065 P
(43) Date of publication of application: 28.08.2013
(73) Proprietor: Dresser-Rand Company, Olean, NY 14760 (US)
(72) Inventor: DEVITO, Kenneth, Houston Texas 77095 (US); KIDD, H. Allan, Shinglehouse Pennsylvania 16748 (US)
(74) Representative: Haseltine Lake Kempner LLP
(86) International application number: PCT/US2011/045834
(87) International publication number: WO 2012/054118

(56) References cited:
- EP-A2- 0 317 186
- GB-A- 751 382
- GB-A- 790 097
- JP-A- 61 069 365
- KR-A- 19990 084 233
- NL-C- 90 548
- US-A- 2 601 076
- US-A- 2 733 792
- US-A- 4 767 378
- US-A- 4 957 644
- US-B1- 6 417 591

## Description

### Cross-Reference to Related Applications

This application claims priority to U.S. Provisional Patent Application Serial No. 61/405,065, which was filed October 20, 2010.

### Background

A coupling is used to transfer torque between two shafts. In some instances, it is desirable for the two shafts to rotate at different speeds. Gearbox couplings are known in the art to couple two shafts, while allowing the two shafts to rotate at different speeds. However, gearbox couplings tend to require frequent maintenance and have a relatively short lifespan due to the constant frictional contact of the gears.

Magnetic couplings are also used to transfer torque between two shafts. In contrast to gearbox couplings, the moving parts in a magnetic coupling do not come into contact. Rather, the torque is transferred between the magnetic coupling components via magnetism. As a result, coupling wear is eliminated, leading to higher reliability and lower maintenance. Conventional magnetic couplings, however, are configured to transfer torque between two shafts such that the rotational speed of each shaft is equal, and this is disadvantageous for those configurations where different shaft speeds are desired.

As relevant prior art, see US2733792, NL90548C16 , GB790097, EP0317186 , GB751382, US4957644 and US2601076.

There is a need, therefore, for a magnetic coupling configured to transfer torque between two shafts while allowing the two shafts to rotate at different speeds.

### Summary of the Invention

The invention is defined by the scope of the claims.

### Brief Description of the Drawings

The present disclosure is best understood from the following detailed description when read with the accompanying Figures. It is emphasized that, in accordance with the standard practice in the industry, various features are not drawn to scale. In fact, the dimensions of the various features may be arbitrarily increased or reduced for clarity of discussion.
Figure 1 illustrates a cross-sectional view of an exemplary magnetic coupling, according to one or more embodiments of the disclosure.
Figure 2 illustrates a cross-sectional view of another exemplary magnetic coupling, according to one or more embodiments of the disclosure.
Figure 3 illustrates a block diagram of an exemplary compressor system, according to one or more embodiments of the disclosure.
Figure 4 illustrates an exemplary method for controlling the amount of torque transferred between first and second shafts, according to one or more embodiments of the disclosure.

### Detailed Description

It is to be understood that the following disclosure describes several exemplary embodiments for implementing different features, structures, or functions of the invention. Exemplary embodiments of components, arrangements, and configurations are described below to simplify the present disclosure, however, these exemplary embodiments are provided merely as examples and are not intended to limit the scope of the invention. Additionally, the present disclosure may repeat reference numerals and/or letters in the various exemplary embodiments and across the Figures provided herein. This repetition is for the purpose of simplicity and clarity and does not in itself dictate a relationship between the various exemplary embodiments and/or configurations discussed in the various Figures. Moreover, the formation of a first feature over or on a second feature in the description that follows may include embodiments in which the first and second features are formed in direct contact, and may also include embodiments in which additional features may be formed interposing the first and second features, such that the first and second features may not be in direct contact. Finally, the exemplary embodiments presented below may be combined in any combination of ways, *i.e*., any element from one exemplary embodiment may be used in any other exemplary embodiment, without departing from the scope of the disclosure.

Additionally, certain terms are used throughout the following description and claims to refer to particular components. As one skilled in the art will appreciate, various entities may refer to the same component by different names, and as such, the naming convention for the elements described herein is not intended to limit the scope of the invention, unless otherwise specifically defined herein. Further, the naming convention used herein is not intended to distinguish between components that differ in name but not function. Further, in the following discussion and in the claims, the terms "including" and "comprising" are used in an open-ended fashion, and thus should be interpreted to mean "including, but not limited to." All numerical values in this disclosure may be exact or approximate values unless otherwise specifically stated. Accordingly, various embodiments of the disclosure may deviate from the numbers, values, and ranges disclosed herein without departing from the intended scope. Furthermore, as it is used in the claims or specification, the term "or" is intended to encompass both exclusive and inclusive cases, *i.e*., "A or B" is intended to be synonymous with "at least one of A and B," unless otherwise expressly specified herein.

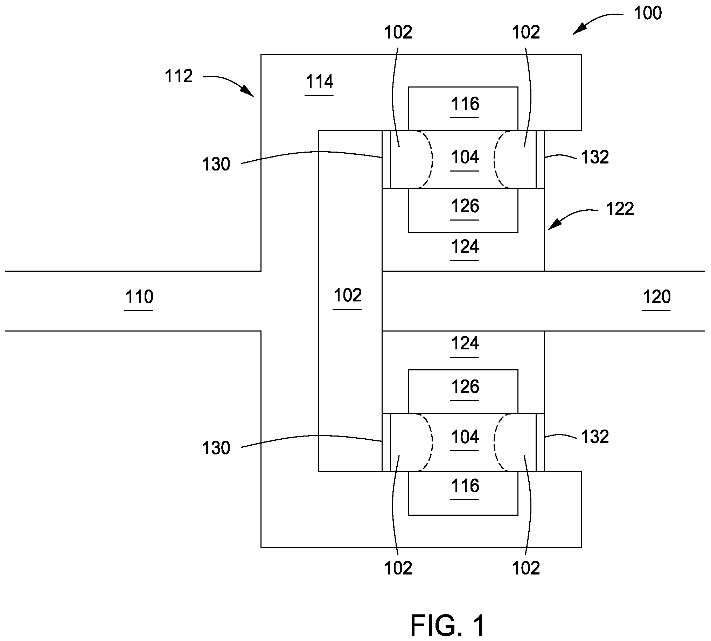

Figure 1 illustrates a cross-sectional view of an exemplary magnetic coupling 100, according to one or more embodiments of the disclosure. The exemplary magnetic coupling 100 includes a first, driving connector 112 coupled to a first shaft 110, and a second, driven connector 122 coupled to a second shaft 120. The driving connector 112 includes a first shaft mount 114 and a first magnet assembly 116 coupled to the first shaft mount 114. The driven connector 122 includes a second shaft mount 124 and a second magnet assembly 126 coupled to the second shaft mount 124. A magnetic field gap 102 is disposed between the driving connector 112 and the driven connector 122 such that the driving connector 112 does not come into contact with the driven connector 122.

The driving connector 112 and the driven connector 122 may be arranged in any configuration that has a magnetic engagement that enables rotational slip between the connectors 112,122 in a predictable and/or controllable manner. In at least one embodiment, the driving connector 112 and the driven connector 122 are arranged in a radial configuration with one connector 112,122 disposed radially inside the other connector 112,122. Further, the connectors 112,122 may be substantially concentric. As shown, the driven connector 122 is disposed radially inside the driving connector 112, and the second magnet assembly 126 is disposed radially inside the first magnet assembly 116. In another embodiment, the driving connector 112 and the driven connector 122 are arranged in an axial configuration with one connector 112,122 facing the other connector 112,122 (not shown). In the axial configuration, the magnet assemblies 116,126 may be planar and have any shape including circular, rectangular, or the like. It will be appreciated that other magnetic coupling 100 configurations may be used without departing from the scope of the disclosure.

The first and second magnet assemblies 116,126 may each include one or more permanent magnets, one or more electromagnets, a ferrous material, a nonferrous electroconductive material, or the like. The first and second magnet assemblies 116,126 generate a magnetic field that transfers rotational movement, *i.e*., torque, from the driving connector 112 to the driven connector 122 by magnetically coupling the driving connector 112 to the driven connector 122. A predetermined (maximum) amount of torque must be transferred from the driving connector 112 to the driven connector 122 for the two connectors 112,122 to rotate at the same speed. Thus, if the predetermined (maximum) amount of torque is transferred from the driving connector 112 to the driven connector 122, the two connectors 112,122 will rotate at the same speed. However, if the amount of torque transferred from the driving connector 112 to the driven connector 122 falls below the predetermined (maximum) amount, a predictable amount of slippage will occur within the magnetic coupling 100. This may allow the driven connector 122 to rotate at a slower speed than the driving connector 112, and thus, the second shaft 120 may rotate at a slower speed than the first shaft 110.

In at least one embodiment, the first and second magnet assemblies 116,126 may be electromagnets, and the amount of torque transferred between the driving and driven connectors 112,122 may be varied according to the amount of power supplied to the electromagnets 116,126. Thus, as the amount of power is increased, the amount of torque transferred between the connectors 112,122 is increased until the predetermined (maximum) amount of torque is transferred. As the amount of power is decreased, the amount of torque transferred between the connectors 112,122 is decreased. When the amount of power supplied to the first and second magnet assemblies is not enough to generate the predetermined (maximum) amount of torque, *i.e*., the amount required for the connectors 112,122 to rotate at the same speed, the amount of power supplied to the first and second magnet assemblies 116,126 may control the ratio of the rotational speed of the driving connector 112 to the rotational speed of the driven connector 122.

In at least one embodiment, a fluid 104, such as a ferrofluid, may be disposed within the gap 102 between the first and second magnet assemblies 116,126. The ferrofluid 104 is a liquid that becomes magnetized in the presence of a magnetic field, such as the magnetic field generated by the first and second magnet assemblies 116,126. The ferrofluid 104 may be or include a colloidal mixture including ferromagnetic orferrimagnetic particles suspended in a carrier fluid, such as an organic fluid, water, or the like. The particles may include a surfactant coating which prevents the particles from agglomerating in the presence of magnetic forces. In at least one embodiment, the fluid 104 may include a magnetorheological fluid, an electrorheological fluid, or the like.

In at least one embodiment, one or more seals 130,132 may be positioned (at any location) to maintain the ferrofluid 104 within the gap 102 or in the magnetic coupling 100 in general. As shown, a first seal 130 may be positioned between the first and second shaft mounts 114,124 on a first side of the magnet assemblies 116,126, and a second seal 132 may be positioned between the first and second shaft mounts 114,124 on a second side of the magnet assemblies 116,126. In at least one embodiment, the first seal 130 may be omitted. In another embodiment, the second seal 132 may be positioned between the first shaft mount 114 and the second shaft 120 (not shown). The seals 130,132 may be any type of seal known to be capable of confining a fluid in a particular area of a rotating machine. However, as may be appreciated, the type and arrangement of the seals 130,132 may vary depending on the application.

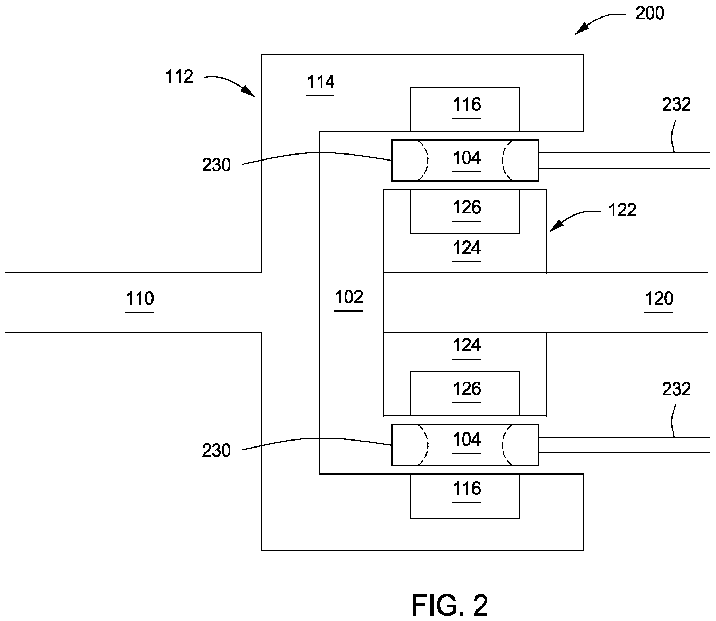

The amount of torque that is transferred from the driving connector 112 to the driven connector 122 may be directly dependent on the concentration of the magnetic field or magnetic flux between the first and second magnet assemblies 116,126. For example, as the concentration of the magnetic flux decreases, the amount of torque transferred from the driving connector 112 to the driven connector 122 also decreases. Other factors that may affect the amount of torque that is transferred from the driving connector 112 to the driven connector 122 are the size of the gap 102, the material of the magnet assemblies 116,126, and the size of the loads 220,230 (see Figure 2) coupled to the first and second shafts 110,120.

An energy or other force may be applied to the ferrofluid 104 to change the state or status of the ferrofluid 104, and as a result, increase or decrease the torque transferred between the driving and driven connectors 112,122. The energy may enable the ferrofluid 104 to increase the concentration of the magnetic flux, thereby increasing the torque transfer from the driving connector 112 to the driven connector 122. Likewise, the energy may enable the ferrofluid 104 to decrease the concentration of the magnetic flux, thereby decreasing the torque transfer from the driving connector 112 to the driven connector 122. Thus, as the energy applied to the ferrofluid 104 may increase or decrease the concentration of the magnetic flux, the energy may control whether enough torque is transferred between the connectors 112,122 so that the connectors 112,122 rotate at the same speed, or whether slippage occurs within the magnetic coupling 100 and the connectors 112,122 rotate at different speeds. Moreover, when less than the predetermined (maximum) amount of torque is transferred from the driving connector 112 to the driven connector 122, and the connectors 112,122 are rotating at different speeds, the ratio of the rotational speed of the driving connector 112 to the rotational speed of the driven connector 122 may correspond to (and be controlled by) the amount of energy applied to the ferrofluid 104.

In at least one embodiment, the energy may be an electrical current. In another embodiment, the energy may be a magnetic field generated by at least one of the magnet assemblies 116,126 or an external magnet (not shown). As can be appreciated, other types of energy may be used without departing from the scope of the disclosure.

Figure 2 illustrates a cross-sectional view of another exemplary magnetic coupling 200, similar in some respects to the magnetic coupling 100 described above in Figure 1. Accordingly, the magnetic coupling 200 may be best understood with reference to Figure 1, wherein like numerals correspond to like components and therefore will not be described again in detail. Unlike the magnetic coupling 100, however, the magnetic coupling 200 may include one or more closed containment assemblies 230 positioned in the gap 102 and having the ferrofluid 104 disposed therein. One or more arms or other attachment devices 232 may be coupled to or integral with the containment assembly 230 and configured to position the containment assembly 230 within the gap 102 such that it is stationary and does not contact the driving or driven connectors 112, 122. The arms 232 may extend axially and/or radially and be coupled to one or more stationary components (not shown) proximate the magnetic coupling 200. In at least one embodiment, the arms 232 may be an annular structure extending circumferentially around the driven connector 122. As neither the containment assembly 230 nor the ferrofluid 104 is in contact with the connectors 112, 122, the containment assembly 230 may act as a pressure barrier and provide isolation between the connectors 112, 122. The containment assembly 230 may be made from a material that will not affect the magnetic flux in the gap 102, such as a composite material or the like.

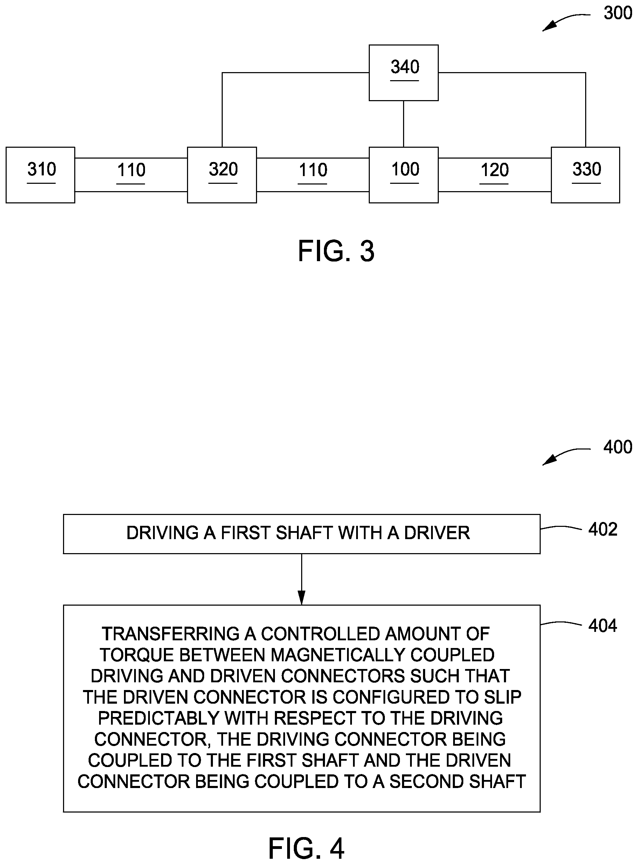

Figure 3 illustrates a block diagram of an exemplary compressor system 300, according to one or more embodiments of the disclosure. In at least one embodiment, a driver 310 may be coupled to and drive the first shaft 110. The driver 310 may be a turbine, a motor, or the like. A compressor 320 may be coupled to the first shaft 110 (as shown) or the second shaft 120, and may be configured to rotate at the same speed as the shaft 110,120 to which it is coupled. The compressor 320 may be a centrifugal compressor, axial compressor, reciprocating compressor, supersonic compressor, or the like. A rotary separator 330 may be coupled to the first shaft 110 or the second shaft 120 (as shown), and may be configured to rotate at the same speed as the shaft 110,120 to which it is coupled. The rotary separator 330 is configured to separate a fluid stream into a substantially gaseous output and a substantially liquid output. The compressor 320 is fluidly coupled with the rotary separator 330 such that the substantially gaseous output from the rotary separator 330 flows into the compressor 320 for compression.

The rotary separator 330 may have a different optimal rotating speed than the compressor 320. A control system 340 may be coupled to the magnetic coupling 100, the compressor 320, and/or the rotary separator 330. The control system 340 may be configured to receive a signal from the rotary separator 330, the compressor 320, or an operator (not shown) and to transmit a signal to the magnetic coupling 100 directing it to maintain, increase, or decrease the torque transferred by the magnetic coupling 100. For example, if the compressor 320 and rotary separator 330 are coupled to the first and second shafts 110,120, respectively (as shown), the control system 340 may receive a signal requesting a slower rotational speed for the rotary separator 330, and the control system 340 may transmit a signal to the magnetic coupling 100 directing it to decrease the torque. In at least one embodiment, the signal may control the power supplied to the electromagnetic magnet assemblies 116,126. In another embodiment, the signal may control the amount of energy applied to the ferrofluid 104.

Figure 4 illustrates an exemplary method 400 for transferring torque through a magnetic coupling, according to one or more embodiments of the disclosure. The method 400 may include driving a first shaft with a driver, as shown at 402. The method 400 may also include transferring a controlled amount of torque between magnetically coupled driving and driven connectors such that the driven connector is configured to slip predictably with respect to the driving connector, as shown at 404. The driving connector may be coupled to the first shaft and the driven connector being coupled to a second shaft.

The foregoing has outlined features of several embodiments so that those skilled in the art may better understand the present disclosure. Those skilled in the art should appreciate that they may readily use the present disclosure as a basis for designing or modifying other processes and structures for carrying out the same purposes and/or achieving the same advantages of the embodiments introduced herein.

## Claims

1. A magnetic coupling (100, 200), comprising:
a rotatable driving connector (112) having a first magnet assembly (116) coupled thereto;
a rotatable driven connector (122) having a second magnet assembly (126) coupled thereto, the driven connector being configured to slip predictably with respect to the driving connector based on a controllable amount of torque transferred between the driving and driven connectors;
a stationary containment assembly (230) comprising an attachment device (232) configured to position the stationary containment assembly in a gap (102) between the driving connector and the driven connector; and
a ferrofluid (104) disposed in the stationary containment assembly.

2. The magnetic coupling assembly of claim 1, wherein the attachment device (232) of the stationary containment assembly is an annular structure extending circumferentially around the driven connector.

3. The magnetic coupling of claim 1, wherein the amount of torque transmitted between the drive connector and the driven connector depends on a state or status of the ferrofluid.

4. The magnetic coupling of claim 3, wherein the state or status of the ferrofluid is controlled by applying energy to the ferrofluid.

5. The magnetic coupling of claim 4, wherein a rotational speed of the driven connector is controlled by an amount of the energy applied to the ferrofluid.

6. The magnetic coupling of claim 4, wherein the energy is a magnetic field.

7. The magnetic coupling of claim 1, wherein the driving connector and the driven connector are arranged in a radial or axial configuration.

8. The magnetic coupling of claim 1, wherein at least one of the first and second magnet assemblies includes a permanent magnet.

9. The magnet coupling of claim 1, wherein at least one of the first and second magnet assemblies includes an electromagnet.

10. A compressor system comprising:
the magnetic coupling (100, 200) of claim 1;
a first shaft (110) coupled to and driven by a driver (310), the driving connector (112) being coupled to the first shaft;
a compressor (320) coupled to the first shaft and configured to rotate at a speed of the first shaft;
a second shaft (120) coupled to the driven connector (122);
a rotary separator (330) coupled to the second shaft and configured to rotate at a speed of the second shaft; and
a control system (340) coupled to the magnetic coupling and configured to transmit a signal to the magnetic coupling controlling the amount of torque transferred between the driving and driven connectors.

11. The compressor system of claim 10, wherein the signal controls an amount of energy applied to the ferrofluid, and the amount of energy controls the amount of torque transferred between the driving and driven connectors.

12. The compressor system of claim 11, wherein a ratio of a speed of the driving connector to a speed of the driven connector is varied according to the amount of energy applied to the ferrofluid.

13. The compressor system of claim 12, wherein a state or status of the ferrofluid is dependent on the amount of energy applied to the ferrofluid.

14. A method for transferring torque through a magnetic coupling (100, 200), as defined in one of previous claims 1 to 9, comprising:
driving a first shaft (110) with a driver (310);
transferring a controlled amount of torque between magnetically coupled driving (112) and driven (122) connectors, such that the driven connector is configured to slip by a predictable amount with respect to the driving connector, the driving connector being coupled to the first shaft and the driven connector being coupled to a second shaft (120);
positioning a stationary containment assembly (230) in a gap between the driving and driven connectors with an attachment device configured to position the stationary containment assembly in a gap (102) between the driving and driven connectors; and
disposing a ferrofluid (104) in the stationary containment assembly in the gap.

15. The method of claim 14 further comprising applying energy to the ferrofluid to control an amount of torque transferred between the driving and driven connectors.

## Patentansprüche

1. Magnetkupplung (100, 200), welche umfasst:
einen drehbaren Antriebsverbinder (112), der eine mit ihm gekoppelte erste Magnetanordnung (116) aufweist;
einen drehbaren angetriebenen Verbinder (122), der eine mit ihm gekoppelte zweite Magnetanordnung (126) aufweist, wobei der angetriebene Verbinder dafür ausgelegt ist, in Bezug auf den Antriebsverbinder basierend auf einem steuerbaren Betrag eines Drehmoments, das zwischen dem Antriebs- und dem angetriebenen Verbinder übertragen wird, vorhersagbar zu rutschen;
eine stationäre Abschirmanordnung (230), die eine Befestigungsvorrichtung (232) umfasst, die dafür ausgelegt ist, die stationäre Abschirmanordnung (102) in einem Zwischenraum (102) zwischen dem Antriebsverbinder und dem angetriebenen Verbinder zu positionieren; und
ein Ferrofluid (104), das in der stationären Abschirmanordnung angeordnet ist.

2. Magnetkupplungsanordnung nach Anspruch 1, wobei die Befestigungsvorrichtung (232) der stationären Abschirmanordnung eine ringförmige Struktur ist, die sich um den Umfang des angetriebenen Verbinders herum erstreckt.

3. Magnetkupplung nach Anspruch 1, wobei der Betrag des Drehmoments, das zwischen dem Antriebsverbinder und dem angetriebenen Verbinder übertragen wird, von einem Zustand oder Status des Ferrofluids abhängt.

4. Magnetkupplung nach Anspruch 3, wobei der Zustand oder Status des Ferrofluids gesteuert wird, indem dem Fluid Energie zugeführt wird.

5. Magnetkupplung nach Anspruch 4, wobei eine Rotationsgeschwindigkeit des angetriebenen Verbinders durch eine Menge der Energie gesteuert wird, die dem Ferrofluid zugeführt wird.

6. Magnetkupplung nach Anspruch 4, wobei die Energie ein Magnetfeld ist.

7. Magnetkupplung nach Anspruch 1, wobei der Antriebsverbinder und der angetriebene Verbinder in einer radialen oder axialen Konfiguration angeordnet sind.

8. Magnetkupplung nach Anspruch 1, wobei die erste und/oder die zweite Magnetanordnung einen Permanentmagneten aufweisen.

9. Magnetkupplung nach Anspruch 1, wobei die erste und/oder die zweite Magnetanordnung einen Elektromagneten aufweisen.

10. Kompressorsystem, welches umfasst:
die Magnetkupplung (100, 200) nach Anspruch 1;
eine erste Welle (110), die mit einer Antriebsvorrichtung (310) gekoppelt ist und von ihr angetrieben wird, wobei der Antriebsverbinder (112) mit der ersten Welle gekoppelt ist;
einen Kompressor (320), der mit der ersten Welle gekoppelt ist und dafür ausgelegt ist, mit einer Geschwindigkeit der ersten Welle zu rotieren;
eine zweite Welle (120), die mit dem angetriebenen Verbinder (122) gekoppelt ist;
einen Rotationsseparator (330), der mit der zweiten Welle gekoppelt ist und dafür ausgelegt ist, mit einer Geschwindigkeit der zweiten Welle zu rotieren; und
ein Steuerungssystem (340), das mit der Magnetkupplung gekoppelt ist und dafür ausgelegt ist, ein Signal an die Magnetkupplung zu übertragen, das den Betrag des Drehmoments steuert, das zwischen dem Antriebs- und dem angetriebenen Verbinder übertragen wird.

11. Kompressorsystem nach Anspruch 10, wobei das Signal eine Energiemenge steuert, die dem Ferrofluid zugeführt wird, und die Energiemenge den Betrag des Drehmoments steuert, das zwischen dem Antriebs- und dem angetriebenen Verbinder übertragen wird.

12. Kompressorsystem nach Anspruch 11, wobei ein Verhältnis einer Geschwindigkeit des Antriebsverbinders zu einer Geschwindigkeit des angetriebenen Verbinders entsprechend der Energiemenge variiert wird, die dem Ferrofluid zugeführt wird.

13. Kompressorsystem nach Anspruch 12, wobei ein Zustand oder Status des Ferrofluids von der Energiemenge abhängig ist, die dem Ferrofluid zugeführt wird.

14. Verfahren zum Übertragen von Drehmoment über eine Magnetkupplung (100, 200), wie in einem der vorhergehenden Ansprüche 1 bis 9 definiert,
umfassend:
Antreiben einer ersten Welle (110) mit einer Antriebsvorrichtung (310);
Übertragen eines gesteuerten Betrages eines Drehmoments zwischen einem Antriebsverbinder (112) und einem angetriebenen Verbinder (122), die magnetisch gekoppelt sind, so dass der angetriebene Verbinder dafür ausgelegt ist, in Bezug auf den Antriebsverbinder vorhersagbar zu rutschen, wobei der Antriebsverbinder mit der ersten Welle gekoppelt ist und der angetriebene Verbinder mit einer zweiten Welle (120) gekoppelt ist;
Positionieren einer stationären Abschirmanordnung (230) in einem Zwischenraum zwischen dem Antriebs- und dem angetriebenen Verbinder, wobei eine Befestigungsvorrichtung dafür ausgelegt ist, die stationäre Abschirmanordnung in einem Zwischenraum (102) zwischen dem zwischen dem Antriebs- und dem angetriebenen Verbinder zu positionieren; und
Anordnen eines Ferrofluids (104) in der stationären Abschirmanordnung in dem Zwischenraum.

15. Verfahren nach Anspruch 14, welches ferner das Zuführen von Energie zu dem Ferrofluid umfasst, um einen Betrag eines Drehmoments zu steuern, das zwischen dem Antriebs- und dem angetriebenen Verbinder übertragen wird.

## Revendications

1. Couplage magnétique (100, 200) comprenant :
un connecteur d'entraînement rotatif (112) ayant un premier ensemble d'aimants (116) couplé à celui-ci ;
un connecteur entraîné rotatif (122) ayant un second ensemble d'aimants (126) couplé à celui-ci, le connecteur entraîné étant configuré pour glisser de manière prévisible par rapport au connecteur d'entraînement sur la base d'une quantité de couple pouvant être commandée transférée entre les connecteurs d'entraînement et entraîné ;
un ensemble de confinement fixe (230) comprenant un dispositif de fixation (232) configuré pour positionner l'ensemble de confinement fixe dans un espace (102) entre le connecteur d'entraînement et le connecteur entraîné ; et
un ferrofluide (104) disposé dans l'ensemble de confinement fixe.

2. Ensemble de couplage magnétique selon la revendication 1, dans lequel le dispositif de fixation (232) de l'ensemble de confinement fixe est une structure annulaire s'étendant de manière circonférentielle autour du connecteur entraîné.

3. Couplage magnétique selon la revendication 1, dans lequel la quantité de couple transmise entre le connecteur d'entraînement et le connecteur entraîné dépend d'un état ou d'un statut du ferrofluide.

4. Couplage magnétique selon la revendication 3, dans lequel l'état ou le statut du ferrofluide est commandé en appliquant de l'énergie au ferrofluide.

5. Couplage magnétique selon la revendication 4, dans lequel une vitesse de rotation du connecteur entraîné est commandée par une quantité de l'énergie appliquée au ferrofluide.

6. Couplage magnétique selon la revendication 4, dans lequel l'énergie est un champ magnétique.

7. Couplage magnétique selon la revendication 1, dans lequel le connecteur d'entraînement et le connecteur entraîné sont agencés dans une configuration radiale ou axiale.

8. Couplage magnétique selon la revendication 1, dans lequel au moins l'un des premier et second ensembles d'aimants comprend un aimant permanent.

9. Couplage magnétique selon la revendication 1, dans lequel au moins l'un des premier et second ensembles d'aimants comprend un électroaimant.

10. Système de compresseur comprenant :
le couplage magnétique (100, 200) de la revendication 1 ;
un premier arbre (110) couplé à et entraîné par un dispositif d'entraînement (310), le connecteur d'entraînement (112) étant couplé au premier arbre ;
un compresseur (320) couplé au premier arbre et configuré pour tourner à une vitesse du premier arbre ;
un second arbre (120) couplé au connecteur entraîné (122) ;
un séparateur rotatif (330) couplé au second arbre et configuré pour tourner à une vitesse du second arbre ; et
un système de commande (340) couplé au couplage magnétique et configuré pour transmettre un signal au couplage magnétique commandant la quantité de couple transférée entre les connecteurs d'entraînement et entraîné.

11. Système de compresseur selon la revendication 10, dans lequel le signal commande une quantité d'énergie appliquée au ferrofluide, et la quantité d'énergie commande la quantité de couple transférée entre les connecteurs d'entraînement et entraîné.

12. Système de compresseur selon la revendication 11, dans lequel un rapport entre une vitesse du connecteur d'entraînement et une vitesse du connecteur entraîné varie en fonction de la quantité d'énergie appliquée au ferrofluide.

13. Système de compresseur selon la revendication 12, dans lequel un état ou un statut du ferrofluide dépend de la quantité d'énergie appliquée au ferrofluide.

14. Procédé pour transférer un couple par un couplage magnétique (100, 200) tel que défini dans l'une quelconque des revendications précédentes 1 à 9, comprenant les étapes consistant à :
entraîner un premier arbre (110) avec un dispositif d'entraînement (310) ;
transférer une quantité commandée de couple entre des connecteurs d'entraînement (112) et entraîné (122) couplés magnétiquement, de telle sorte que le connecteur entraîné est configuré pour glisser d'une quantité prévisible par rapport au connecteur d'entraînement, le connecteur d'entraînement étant couplé au premier arbre et le connecteur entraîné étant couplé à un second arbre (120) ;
positionner un ensemble de confinement fixe (230) dans un espace entre les connecteurs d'entraînement et entraîné avec un dispositif de fixation configuré pour positionner l'ensemble de confinement fixe dans un espace (102) entre les connecteurs d'entraînement et entraîné ; et
disposer un ferrofluide (104) dans l'ensemble de confinement fixe dans l'espace.

15. Procédé selon la revendication 14, comprenant en outre l'application d'énergie au ferrofluide pour commander une quantité de couple transférée entre les connecteurs d'entraînement et entraîné.
